# EUROPÄISCHE PATENTSCHRIFT

(11) **EP 1 478 870 B1**
(45) Veröffentlichungstag und Bekanntmachung des Hinweises auf die Patenterteilung: **11.01.2006**
(21) Anmeldenummer: 03704636.4
(22) Anmeldetag: 17.02.2003
(51) Int. Cl.: F16L 23/10

(54) **KUPPLUNG ZUM VERBINDEN VON ZWEI ROHREN**
COUPLING FOR CONNECTING TWO PIPES
RACCORD POUR ASSEMBLER DEUX TUYAUX

(30) Priorität: 15.02.2002 DE 20202244 U
(43) Veröffentlichungstag der Anmeldung: 24.11.2004
(73) Patentinhaber: Vieregge, Uwe, 63584 Gründau (DE)
(72) Erfinder: Vieregge, Uwe, 63584 Gründau (DE)
(74) Vertreter: Stoffregen, Hans-Herbert
(86) Internationale Anmeldenummer: PCT/EP2003/001569
(87) Internationale Veröffentlichungsnummer: WO 2003/069204

(56) Entgegenhaltungen:
- DE-U- 20 006 065
- FR-A- 1 196 266
- GB-A- 2 362 428

## Beschreibung

Die Erfindung bezieht sich auf eine Kupplung zum Verbinden von zwei Rohren, insbesondere Rohren einer Sprinkleranlage, umfassend ein ringförmiges aus zwei gleichen Ringhälften bestehendes Gehäuse mit einem Ringraum zur Aufnahme einer auf den aneinandergrenzenden Rohren anliegenden Dichtung, wobei jede Ringhälfte in einem ersten Endbereich einen radial abragenden flanschartigen Abschnitt aufweist, der zum Verbinden der Ringhälften von einem Schraubelement durchsetzt ist, und deren anderer zweiter Endbereich jeweils zwei zueinander fluchtende Durchgangsöffnungen aufweisende abragende Vorsprünge aufweist, wobei bei zusammengesetztem Gehäuse die Durchgangsöffnungen der beiden Ringhälften zueinander fluchten und von einem Bolzenelement durchsetzt sind.

Eine entsprechende Kupplung ist der DE 200 06 065 U1 zu entnehmen. Dabei durchsetzt das die Ringhälften des Gehäuses in einem ihrer Endbereiche verbindende Schraubelement Durchgangsöffnungen der radial abragenden flanschartigen Abschnitte. Dies bedeutet, dass zum Öffnen des Gehäuses die Mutter vollständig von dem Schraubbolzen des Schraubelementes abgedreht werden muss, um sodann aus den Durchgangsöffnungen herausgezogen zu werden. Dies ist umständlich und birgt zudem die Möglichkeit, dass das Schraubelement verlegt wird.

Aus der FR 2 683 017 A1 ist eine Kupplung für Rohre bekannt, die ebenfalls aus zwei identischen Hälften besteht, die in ihren jeweiligen Endbereichen radial abragende Flanschabschnitte aufweisen, die jeweils von Schraubelementen durchsetzt sind. Eine entsprechende Konstruktion ergibt sich auch aus der US 4,819,974.

Aus der GB 2 362 428 A ist eine Kupplung bekannt, bei der ungleiche Ringhälften über eine T-Bolzen-Schraube verbindbar sind, deren Querschenkeln in einer angepassten Aussparung in einer der Ringhälften einsetzbar ist. Dabei kann der T-Bolzen über einen von diesem ausgehenden Vorsprung innerhalb der Aussparung einer der Ringhälften gesichert werden, von der der Querschenkel nicht ausgeht.

Der vorliegenden Erfindung liegt das Problem zu Grunde, eine Kupplung der eingangs genannten Art so weiterzubilden, dass ein Schließen bzw. Öffnen des Gehäuses schnell und problemlos möglich ist, wobei gleichzeitig sichergestellt sein soll, dass die die Gehäuseteile verbindenden Schraubelemente nicht Verlegt werden können. Auch soll eine gute Abdichtung zu den zu verbindenden Rohren möglich sein.

Efindungsgemäß wird das Problem im Wesentlichen dadurch gelöst, dass das die Ringhälften in den ersten Endbereichen verbindende Schraubelement eine Hammerkopf- oder T-Bolzen-Schraube ist, deren Querschenkel an einer der flanschartigen Abschnitte außenseitig anliegt und zum Verschwenken um seine Längsachse über ein Halteelement in Form eines Feder- oder Drahtelementes gesichert ist, das an dem flanschartigen Abschnitt gesichert ist, an dem der Querschenkel anliegt, und dass das Schraubelement mit seinem Gewindeabschnitt vorzugsweise U- und/oder V-förmige jeweils vom äußeren Querrand der radial sich erstreckenden flanschartigen Abschnitte ausgehende Aussparungen durchsetzt.

Abweichend vom vorbekannten Stand der Technik werden die Gehäusehälften nicht über ein Durchgangsöffnungen durchsetzendes Schraubelement verbunden, sondern von einer Hammerkopf- oder einer T-Bolzen-Schraube, dessen Gewindeteil eine von außen frei zugängliche schlitzförmige Aussparung in dem radial abragenden flanschartigen Abschnitt sowohl der ersten als auch der zweiten Ringhälfte durchsetzt, so dass ein einfaches Einbringen bzw. Entfernen möglich ist, um die Gehäusehälften zu verschrauben bzw. zu lösen. Gleichzeitig ist jedoch sichergestellt, dass die Schraube quasi unverlierbar mit einem der Gehäusehälften verbunden ist, wobei das Schraubelement um den Querschenkel der Schrauben als Schwenkachse schwenkbar ist.

Durch die Verwendung der Hammerkopf- bzw T-Bolzen-Schraube, deren Querschenkel symmetrisch zur Längsachse des Gewindeschafts verlaufen sollte, ergibt sich der Vorteil, das sich der Gewindeschaft mit seiner Längsachse automatisch senkrecht zur Abstützfläche der Mutter wie Flanschmutter ausrichtet, so dass ein Einleiten von Biegemomenten auf den Schaft ausgeschlossen wird.

Des Weiteren ist vorgesehen, dass der in die zueinander fluchtend ausgerichteten Öffnungen der von den zweiten Endabschnitten der Ringhälften ausgehenden Abschnitte einbringbare Bolzen einseitig verpresst ist. Dies kann durch Körnerschlag erfolgen. Somit ist eine einfache Fixierung des Bolzens in einer der äußeren Durchgangsöffnung einer der abragenden Vorsprünge der Ringhälften gegeben, um ein Gelenk auszubilden. Besonderer Sicherungen für den Bolzen bedarf es sodann nicht mehr, ohne dass die Gefahr besteht, dass der Bolzen unkontrolliert aus den Öffnungen herausgleitet.

Um Maßungenauigkeiten auszugleichen, sicht eine Weiterbildung der Erfindung vor, dass vom Stirnwandbereich der jeweiligen ersten Endabschnitte der Ringhälften ein zungenartiger Abschnitt ausgeht, neben dem eine geometrisch entsprechend angepasste Aussparung verläuft derart, dass bei zusammengesetztem Gehäuse der zungenartige Abschnitt der einen Ringhälfte in die an diesen angepasste Aussparung der anderen Ringhälfte eingreift und umgekehrt.

Hierdurch bedingt ergibt sich peripher ein geschlossener Ring mit der Folge, dass die in den Ringraum des Gehäuses eingebrachte Dichtung beim Spannen des Gehäuses umfangsseitig eindeutig fixiert und geführt ist.

Um beim Anziehen der Schrauben ein Verschwenken dieser in Richtung Stoßfläche der Ringhälften zu ermöglichen, wodurch ein festes Anziehen der Ringhälften ermöglicht wird, ist des Weiteren vorgesehen, dass die Abstützfläche des flanschartigen Abschnitts für die Mutter eine Ebene aufspannt, die geneigt zu einer Ebene verläuft, in der das Bolzenelement und Mittelpunkt geschlossener Kupplung liegen.

Weitere Vorteile der Erfindung ergeben sich aus der nachfolgenden Beschreibung von der Zeichnung zu entnehmenden bevorzugten Ausführungsbeispielen.

Es zeigen:
- Fig. 1: eine Seitenansicht einer erfindungsgemäßen Kupplung,
- Fig. 2: eine Draufsicht auf die Kupplung gemäß Fig. 1,
- Fig. 3: einen Schnitt entlang der Linie A-B in Fig. 1,
- Fig. 4: eine Vorderansicht der Kupplung gemäß Fig. 1,
- Fig. 5: eine Rückansicht der Kupplung gemäß Fig. 1,
- Fig. 6: eine perspektivische Darstellung der Kupplung gemäß Fig. 1,
- Fig. 7: eine Seitenansicht einer Ringhälfte der Kupplung gemäß Fig. 1,
- Fig. 8: eine Vorderansicht der Ringhälfte gemäß Fig. 7,
- Fig. 9: eine Rückansicht der Ringhälfte gemäß Fig. 7,
- Fig. 10: eine Draufsicht der Ringhälfte gemäß Fig. 7,
- Fig. 11: ein Detail "Z" gemäß Fig. 8,
- Fig. 12: ein Schnitt entlang der Linie C-C in Fig. 9,
- Fig. 13: eine perspektivische Darstellung der Ringhälfte gemäß Fig. 7 und
- Fig. 14-16: Abschnitte einer Ringhälfte in verschiedenen Ansichten.

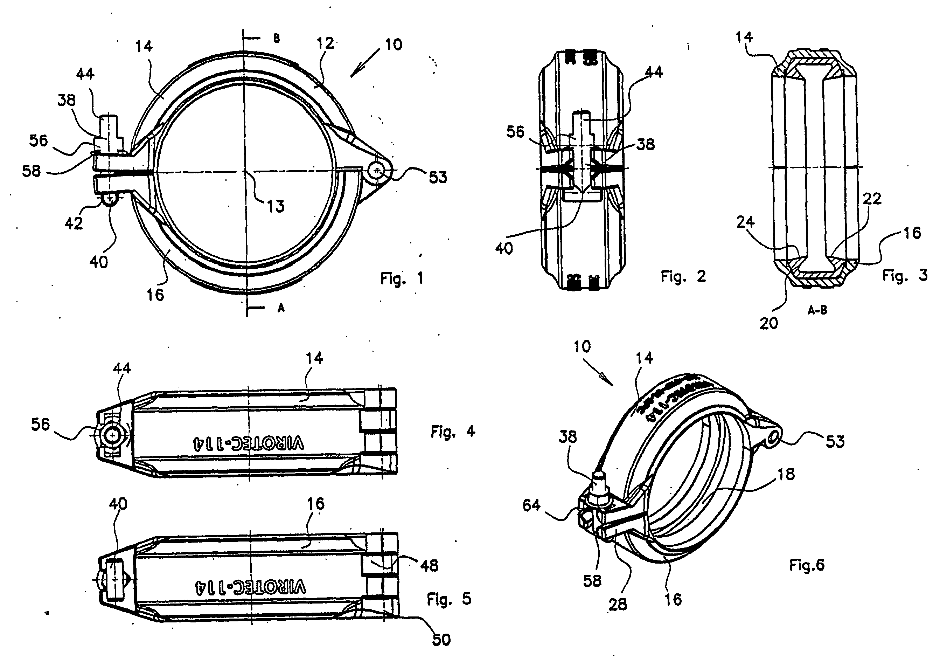

In den Fig. 1 bis 13 sind eine erfindungsgemäße Kupplung 10 - die z. B. als Riefenkupplung und somit in umlaufenden außenseitig strukturierten wie Riefen aufweisende Vertiefungen von Rohren ersetzbar ist - und Details dieser dargestellt, um zwei Rohre, insbesondere Sprinklerrohre im Bereich ihrer Stoßstelle miteinander zu verbinden. Dabei besteht die Kupplung 10 aus einem Gehäuse 12, das seinerseits aus zwei gleichen Ringhälften 14, 16 zusammengesetzt ist.

Bei zusammengesetzten Ringhälften 14, 16 wird ein innerer Ringraum 18 zur Verfügung gestellt, in dem eine Dichtung 20 eingebracht wird, die sowohl bodenseitig als auch flankenseitig vollständig von Wandungen des Ringraums 18 abgestützt sein kann. Die Dichtung 20 weist nach dem Ausführungsbeispiel der Fig. 3 im Schnitt eine C-Form auf, deren Schenkel 22, 24 auf jeweils einem der mittels der Kupplung 10 druckdicht zu verbindenden Rohre dichtend aufliegt.

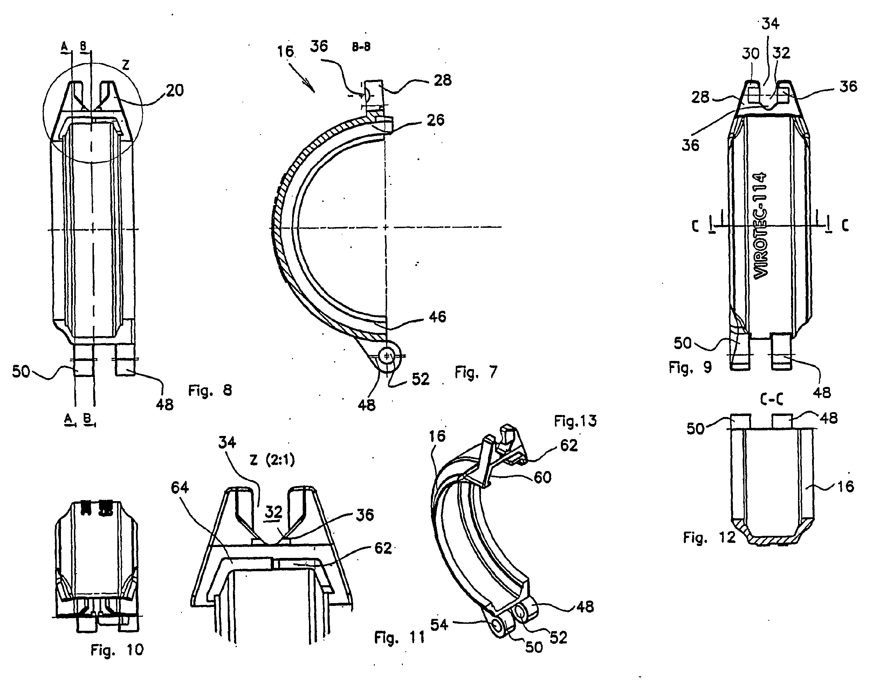

Die Ringhälften 14, 16 sind erwähntermäßen gleich aufgebaut, so dass nachstehend nur eine der Ringhälften, und zwar die Ringhälfte 16 anhand der Fig. 7 bis 13 erläutert wird.

Die Ringhälfte 16 - und damit auch die Ringhälfte 14 - weist in ihrem einen - ersten - Endbereich 26 einen radial abragenden flanschartigen Abschnitt 28 auf, der von seinem Querrandbereich 30 ausgehend eine schlitzförmige Aussparung 32 aufweist, die eine U- bzw. V-förmige Geometrie aufweist. Insbesondere setzt sich die schlitzförmige Aussparung 32 aus einem ringkammerfernliegenden rechteckförmigen Abschnitt und einem ringkammernabeliegenden V-förmigen Abschnitt 34 bzw. 36 zusammen, ohne dass hierdurch eine Einschränkung der Erfindung erfolgen soll.

Außenseitig weist der flanschartige Abschnitt 28 eine taschenförmige Vertiefung 36 auf, um von einer Hammerkopf- bzw. T-Bolzen-Schraube 38 deren Querschenkel 40 aufzumehmen. Gleichzeitig ist der Querschenkel 40 über ein Halteelement wie ein Federelement oder Drahtbügel 42 gesichert, so dass die Hammerkopf- bzw. T-Bolzen-Schraube 38 um den Querschenkel 40 als Schwenkachse verschwenkbar ist. Außerdem ergibt sich durch Fixierung eine Unverlierbarkeit.

Die Hammerkopf- bzw. T-Bolzen-Schraube 38 durchsetzt des Weiteren mit ihrem Gewindeteil 42 die schlitzförmigen Aussparungen 34 bei zusammengesetztem Gehäuse 12 (siehe Fig. 1, 4, 5, 6), wobei unabhängig von der Stellung der Hammerkopf- bzw. T-Bolzen-Schraube 38 diese aufgrund der Sicherung des Querschenkels 14 durch das Halteelement 42 oder ein gleichwirkendes Element unverlierbar ist.

Gegenüberliegend von dem flanschartigen Abschnitt 28 gehen von dem zweiten Endabschnitt 46 radial abragende Vorsprünge 48, 50 aus, die von fluchtend zueinander ausgerichteten Durchtrittsöffnungen 52, 54 durchsetzt sind. Somit sind bei zusammengesetzten Ringhälften 14, 16 die entsprechenden Durchgangsöffnungen 52, 54 der Vorsprünge 48, 50 fluchtend zueinander ausgerichtet und werden von einem vorzugsweise einseitig verpressten Bolzen 53 durchsetzt, wodurch ein Gelenk gebildet wird.

Um über die im Bereich ihrer zweiten Enden 46 gelenkig verbundenen Ringhälften 14, 16 dichtend zwei Rohre in ihrem Stoßbereich zu verbinden, ist es nur noch erforderlich, dass die im Bereich der ersten Abschnitte 26 radial abragenden Abschnitte 28 aufeinanderzu bewegt und sodann das Gewindeteil 44 der Hammerkopf- bzw. T-Bolzen-Schraube 38 um den Querschenkel 40 verschwenkt wird, um damit das Gewindeteil 44 den flanschartigen Abschnitt der den Querschenkel 40 nicht aufnehmenden Ringhälfte 14 zu durchsetzen. Sodann wird eine auf den Gewindeabschnitt 44 aufgeschraubte Mutter 56 mit insbesondere angeschweißter Flanschscheibe 58 angezogen und somit die Kupplung 10 dichtend um die zu verbindenden Rohre gelegt.

Um mögliche Toleranzschwankungen auszugleichen, geht vom jeweiligen Stirnrandbereich 60 der Ringhälfte 14, 16 ein zungenartiger Vorsprung 62 aus, neben dem eine an dessen Geometrie angepaßte Aussparung 64 verläuft, so dass bei zusammengesetztem Gehäuse 12, also zueinander ausgerichteten Stimbereichen 60 der Ringhälften 14, 16 der zungenartige Vorsprung 62 der einen Ringhälfte in die entsprechende Aussparung 64 der anderen Ringhälfte eingreift und umgekehrt.

Hierdurch ist sichergestellt, dass sich für die in den Ringraum 18 eingebrachte Dichtung 20 eine peripher im Wesentlichen geschlossene Abstützfläche ergibt, so dass beim Anziehen der Kupplung 10 die Dichtung 20 nicht herausgequetscht werden kann. Folglich ist die gewünschte Dichtheit gegenüber den zu verbindenden Rohren gewährleistet.

Außenseitig ist der flanschartige Abschnitt 28, und zwar außerhalb der Aufnahmetasche 36 für den Querschenkel 40 der Hammerkopf- bzw. T-Bolzen-Schraube 38, eben ausgebildet, um eine hinreichende Abstützfläche für den Flansch 58 der Mutter 56 zu bieten, so dass mit dem erforderlichen Kraftschluss die Ringhälften 14, 16 zusammengezogen werden können. Die einander zugewandten Bereiche der radial abragenden flanschartigen Abschnitte 28 bilden demgegenüber eine im Schnitt viereckförmige kammerförmige Aussparung 64, in die die von den Querrandbereichen 30 der flanschartigen Abschnitte 28 ausgehende schlitzförmige Aussparung 32 übergeht und innerhalb der sich der Gewindeabschnitt 38 der Hammerkopf- bzw. T-Bolzen-Schraube 38 erstreckt.

Die Abstützfläche für die Mutter 56 spannt dabei eine Ebene auf, die geneigt in Richtung des Bolzens 53 verläuft und zu einer den Bolzen 53 und Mittelpunkt 13 geschlossener Kupplung 10 enthaltenden Ebene einen spitzen Winkel einschließt.

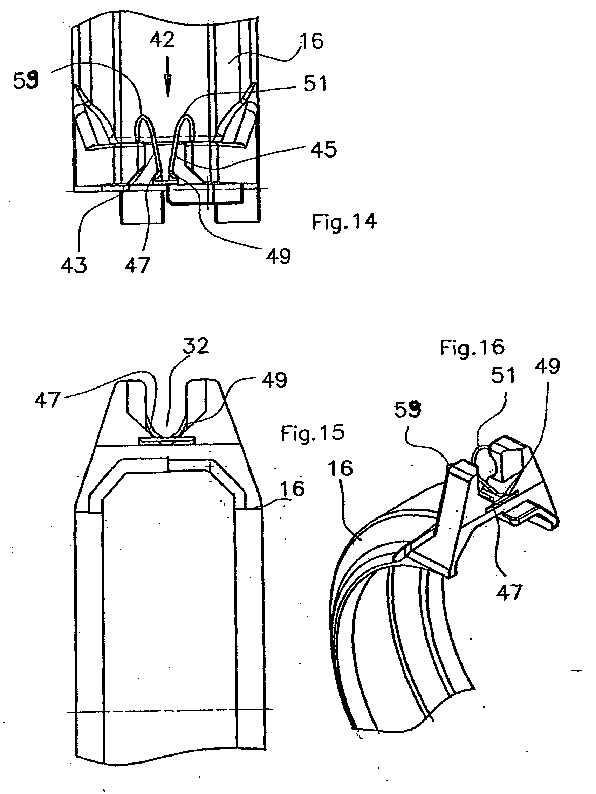

An Hand der den Fig. 14 bis 16 zu entnehmenden Darstellungen eines Abschnitts der Ringhälfte 16 ist das drahtförmige Halteelement 42 für den Steg 40 der Schraube 38 besonders deutlich erkennbar. Das Halteelement 42 besteht aus zwei gebogenen Abschnitten 43, 45 die zueinander divergierende Ebenen aufspannen. Jeder Abschnitt 43, 45 weist einen einen Widerhaken bildenden Schenkelabschnitt 47, 49 auf, der im Bereich der Aussparung 32 festlegbar ist, wohingegen entfernt liegender Schenkelabschnitt 51, 59 eine ringabschnittförmige Aufnahme für den Steg 40 bzw. dessen Enden bilden. Die Fig. 14-16 sind insoweit selbstklärend und offenbaren umfassend die entsprechenden Merkmale.

## Patentansprüche

1. Kupplung zum Verbinden von zwei Rohren, insbesondere Rohren einer Sprinkleranlage, umfassend ein ringförmiges aus zwei gleichen Ringhälften (14, 16) bestehendes Gehäuse (12) mit einem Ringraum (18) zur Aufnahme einer auf den aneinandergrenzenden Röhren anliegenden Dichtung (20), wobei jede Ringhälfte in einem ersten Endbereich (26) einen radial abragenden flanschartigen Abschnitt aufweist, der zum Verbinden der Ringhälfte von einem Schraubelement (38) durchsetzt ist, und deren anderer zweiter Endbereich (46) jeweils zwei zueinander fluchtende Durchgangsöffnungen aufweisende abragende Vorsprünge (48, 50) aufweist, wobei bei zusammengesetztem Gehäuse die Durchgangsöffnungen der zwei Ringhälften zueinander fluchten und von einem Bolzenelement (53) zur Bildung eines Gelenkes durchsetzt sind,
**dadurch gekennzeichnet,**
**dass** das die ersten Endbereiche (28) der Ringhälften (14, 16) des Gehäuses (12) durchsetzende Schraubelement eine Hammerkopf- oder T-Bolzen-Schraube (38) ist, deren Querschenkel (40) an einer der flanschartigen Abschnitte außenseitig anliegt und zum Verschwenken um seine Längsachse über ein Halteelement in Form eines Feder- oder Drahtelementes gesichert ist, das an dem flanschartigen Abschnitt gesichert ist, an dem der Querschenkel anliegt, und dass das Schraubelement mit seinem Gewindeabschnitt (44) eine vom äußeren Querrand (30) des sich radial erstreckenden flanschartigen Abschnitts (28) ausgehende Aussparung (32) durchsetzt.

2. Kupplung nach Anspruch 1,
**dadurch gekennzeichnet,**
**dass** das Halteelement (42) aus zwei gebogenen Abschnitten (43, 45) besteht, wobei jeder Abschnitt in einem Endbereich als Widerhaken (47, 49) und im anderen Endbereich (51, 59) bogenförmig zur Aufnahme des Querschenkels (40) der Hammerkopf- bzw. T-Bolzen-Schraube (38) ausgebildet ist.

3. Kupplung nach Anspruch 1,
**dadurch gekennzeichnet,**
**dass** der radial abragende flanschartige Abschnitt (28) außenseitig eine Vertiefung wie taschenförmige Aufnahme (36) für teilweises Aufnehmen des Querschenkels (40) der Hammerkopf- bzw. T-Bolzen-Schraube (38) aufweist.

4. Kupplung nach Anspruch 2,
**dadurch gekennzeichnet,**
**dass** sich der Querschenkel (40) der Hammerkopf- bzw. T-Bolzen-Schrauben (38) bereichsweise flächig an der Innenfläche der Aufnahme abstützt.

5. Kupplung nach zumindest einem der vorhergehenden Ansprüche,
**dadurch gekennzeichnet,**
**dass** die von dem Gewindeabschnitt (44) der Hammerkopf- bzw. T-Bolzen-Schraube (38) durchsetzte vom Stimrandbereich (30) des flanschartigen Abschnitts (28) ausgehende Aussparung (32) aus einem äußeren rechteckförmigen und einem inneren V-förmigen Abschnitt zusammengesetzt ist.

6. Kupplung nach zumindest einem der vorhergehenden Ansprüche,
**dadurch gekennzeichnet,**
**dass** der flanschartige Abschnitt (28) an der Außenseite eine glatte Abstützfläche für von dem Gewindeabschnitt (44) der Hammerkopf- bzw. T-Bolzen-Schraube (38) durchsetzten Mutter (56) aufweist.

7. Kupplung nach Anspruche 6,
**dadurch gekennzeichnet,**
**dass** die Mutter (56) eine Flanschmutter ist, deren Flansch auf der Außenfläche des flanschartigen Abschnittes (28) der Ringhälfte (14, 16) flächig oder im Wesentlichen flächig aufliegt.

8. Kupplung nach zumindest einem der vorhergehenden Ansprüche,
**dadurch gekennzeichnet,**
**dass** das in die bei miteinander verbundenen Gehäusehälften (14, 16) zueinander fluchtenden Durchgangsöffnungen (52, 54) der von den zweiten Endbereichen (46) abragenden Vorsprünge (48, 50) einbringbare Bolzenelement (53) einseitig verpresst ist.

9. Kupplung nach zumindest einem der vorhergehenden Ansprüche,
**dadurch gekennzeichnet,**
**dass** das Bolzenelement (53) durch Körnerschlag verpresst ist.

10. Kupplung nach zumindest einem der vorhergehenden Ansprüche 6 bis 9,
**dadurch gekennzeichnet,**
**dass** Abstützfläche des flanschartigen Abschnitts (28) für die Mutter (56) eine Ebene aufspannt, die geneigt zu einer Ebene verläuft, in der das Bolzenekement (53) und Mittelpunkt (13) geschlossener Kupplung (10) liegen.

## Claims

1. Coupling for connection of two pipes, in particular pipes of a sprinkler system, comprising an annular housing (12) consisting of two identical ring halves (14, 16) with an annular area (18) for receiving a seal (20) in contact with the adjoining pipes, where each ring half has in a first end area (26) a radially extending and flange-like section which is passed through by a screw element (38) for connection of the ring half and where its other second end area (46) has two extending projections (48, 50) having two through-holes aligned with one another, where said through-holes of the two ring halves are in alignment when the housing is put together and are passed through by a bolt element (53) to form a joint,
**wherein**
the screw element passing through the first end areas (28) of the ring halves (14, 16) of the housing (12) is a hammer-head or T-bolt screw (38) whose transverse leg (40) contacts the outside of one of the flange-like sections and is secured for swivelling about its longitudinal axis by a holding element in the form of a spring or wire element that is secured at the flange-like section contacted by the transverse leg, and wherein the screw element passes with its threaded section (44) through a recess (32) extending from the outer transverse edge (30) of the radially extending and flange-like section (28).

2. Coupling according to Claim 1,
**wherein**
the holding element (42) comprises two curved sections (43, 45), where each section is designed in one end area as a barb (47, 49) and in the other end area (51, 59) is curved to receive the transverse leg (40) of the hammer-head or T-bolt screw (38).

3. Coupling according to Claim 1,
**wherein**
the radially extending flange-like section (28) has on the outside a recess such as a pocket-like receptacle (36) for partially receiving the transverse leg (40) of the hammer-head or T-bolt screw (38).

4. Coupling according to Claim 2,
**wherein**
the transverse leg (40) of the hammer-head or T-bolt screw (38) is in surface contact with the inner surface of the receptacle in some areas.

5. Coupling according to at least one of the previous claims,
**wherein**
the recess (32) extending from the front edge area (30) of the flange-like section (28) and passed through by the threaded section (44) of the hammer-head or T-bolt screw (38) is made up of an outer rectangular section and an inner V-shaped section.

6. Coupling according to at least one of the previous claims,
**wherein**
the flange-like section (28) has on the outside a smooth support surface for nuts (56) passed through by the threaded section (44) of the hammer-head or T-bolt screw (38).

7. Coupling according to Claim 6,
**wherein**
the nut (56) is a flanged nut whose flange is in surface contact or substantially in surface contact with the outer surface of the flange-like section (28) of the ring half (14, 16).

8. Coupling according to at least one of the previous claims,
**wherein**
the bolt element (53) fittable into the through-holes (52, 54) aligned when the housing halves (14, 16) are connected to one another and provided in the projections (48, 50) extending from the second end areas (46) is crimped on one side.

9. Coupling according to at least one of the previous claims,
**wherein**
the bolt element (53) is crimped by centre-punching.

10. Coupling according to at least one of the previous claims,
**wherein**
the support surface of the flange-like section (28) for the nut (56) spans a plane running obliquely to a plane in which the bolt element (53) and the center point (13) of the closed coupling (10) are located.

## Revendications

1. Raccord pour relier deux tuyaux, en particulier les tuyaux d'une installation de gicleurs d'incendie, comprenant un corps (12) en forme de bague constitué de deux demi-bagues identiques (14, 16), avec un espace annulaire (18) destiné à accueillir un joint (20) situé sur les tuyaux reliés l'un à l'autre, sachant que chaque demi-bague présente à une première extrémité (26) une section en forme de bride faisant saillie dans le sens radial qui est traversée par un dispositif de vissage (38) pour raccorder les moitiés de bague, et que les deuxièmes extrémités (46) présentent respectivement deux parties en saillie (48, 50) présentant des ouvertures de passage alignées les unes par rapport aux autres, sachant que dans un corps assemblé les ouvertures de passage des deux demi-bagues sont alignées et traversées par un goujon (53) pour former une articulation,
**caractérisé en ce que**
le dispositif de vissage traversant les premières extrémités (28) des demi-bagues (14, 16) du corps (12) est une vis à tête marteau ou vis en T (38) dont la partie transversale (40) s'appuie à l'extérieur contre une des sections en forme de bride et est sécurisé contre le balayage horizontal autour de son axe longitudinal par l'intermédiaire d'un support en forme d'élément à ressort ou à fil métallique qui est sécurisé contre la section en forme de bride sur laquelle la partie transversale s'appuie, et que le dispositif de vissage traverse avec sa partie filetée (44) un évidement (32) partant du bord transversal (30) extérieur de la section en forme de bride s'étendant dans le sens radial (28).

2. Raccord selon la revendication 1,
**caractérisé en ce que**
le support (42) est composé de deux sections incurvées (43, 45), sachant que chaque section présente à une extrémité des ardillons (47, 49) et est à l'autre extrémité (51, 59) en forme d'arc pour loger la partie transversale (40) de la vis à tête marteau ou en T (38).

3. Raccord selon la revendication 1,
**caractérisé en ce que**
la section en forme de bride faisant saillie dans le sens radial (28) présente sur sa face extérieure un évidement tel qu'un logement en forme de poche (36) pour loger partiellement la partie transversale (40) de la vis à tête marteau ou en T (38).

4. Raccord selon la revendication 2,
**caractérisé en ce que**
la partie transversale (40) de la vis à tête marteau ou en T (38) s'appuie par endroit à plat contre la surface intérieure du logement.

5. Raccord selon au moins une des revendications précédentes,
**caractérisé en ce que**
l'évidement (32) traversé par la partie filetée (44) de la vis à tête marteau ou en T (38) et partant de la section du bord supérieur (30) de la section en forme de bride (28) est composé d'une section extérieure de forme rectangulaire et d'une section intérieure en forme de V.

6. Raccord selon au moins une des revendications précédentes,
**caractérisé en ce que**
la section en forme de bride (28) présente sur sa face extérieure une surface d'appui lisse pour l'écrou (56) traversé par la partie filetée (44) de la vis à tête marteau ou en T (38).

7. Raccord selon la revendication 6,
**caractérisé en ce que**
l'écrou (56) est un écrou à bride dont la bride est appuyée à plat ou pour l'essentiel à plat sur la surface extérieure de la section en forme de bride (28) des demi-bagues (14, 16).

8. Raccord selon au moins une des revendications précédentes,
**caractérisé en ce que**
le goujon (53) introduit en passant dans les ouvertures de passage (52, 54) alignées les unes par rapport aux autres lorsque les deux moitiés du corps (14, 16) sont assemblées, ces ouvertures se trouvant dans les parties en saillies (48, 50) des deuxièmes extrémités (46), est compressé à une extrémité.

9. Raccord selon au moins une des revendications précédentes,
**caractérisé en ce que**
le goujon (53) est compressé par coup de pointeau.

10. Raccord selon au moins des revendications 6 à 9,
**caractérisé en ce que**
la surface d'appui de la section en forme de bride (28) présente pour l'écrou (56) un plan incliné par rapport à un plan sur lequel se trouvent le goujon (53) et le point central (13) du raccord fermé (10).
